# EUROPEAN PATENT SPECIFICATION

(11) **EP 4 429 003 B1**
(45) Date of publication and mention of the grant of the patent: **27.05.2026**
(21) Application number: 24153811.5
(22) Date of filing: 25.01.2024
(51) Int. Cl.: H01M 50/247

(54) **POWER TOOL AND BATTERY PACK**
ELEKTROWERKZEUG UND BATTERIEPACK
OUTIL ÉLECTRIQUE ET BLOC-BATTERIE

(30) Priority: 06.03.2023 CN 202310206689; 08.12.2023 CN 202311677651
(43) Date of publication of application: 11.09.2024
(73) Proprietor: Nanjing Chervon Industry Co., Ltd., Nanjing, Jiangsu 211106 (CN)
(72) Inventor: YANG, Dezhong, Nanjing (CN); HU, Guiwu, Nanjing (CN)
(74) Representative: Sun, Yiming

(56) References cited:
- CN-A- 109 926 290
- CN-A- 112 993 442
- US-A1- 2015 140 411
- US-A1- 2020 321 576

## Description

### TECHNICAL FIELD

The present invention relates to the field of power tools and, in particular, to a battery pack with better impact resistance.

### BACKGROUND

When a user works with a power tool provided with a battery pack, the battery pack may detach from the power tool body and fall to the ground due to careless operation. Especially if the battery pack falls to the ground during working at high altitudes, the housing or the battery cells in the housing may be damaged. Some users even habitually use the battery pack provided on the tool as a hammer when using the power tool, leading to a risk of the battery pack being damaged.

This part provides background information related to the present application, which is not necessarily the existing art.

US 2020/321576 A1 describes a battery pack which includes a housing, one or more battery cells housed inside the housing, one or more seat surfaces disposed inside the housing, a circuit board which is housed inside the housing and is mounted on the seat surface(s), and one or more terminals electrically connected to the circuit board.

US 2015/140411 A1 describes a battery system which includes a polyurea coating applied to a metal casing of a battery cell, wherein the polyurea coating is formed from a reaction mixture of an isocyanate component with ceramic particles, and an amine component with ceramic particles.

### SUMMARY

The present invention is defined by the independent claims. Advantageous embodiments are described in the dependent claims, the following description and the drawings. The present invention aims to solve or at least alleviate all or part of the preceding problems. For this reason, an object of the present invention is to provide a battery pack and a power tool with better impact resistance.

To achieve the preceding object, the present invention adopts the technical solutions described below.

A power tool includes a tool body; an electric motor disposed in the tool body; and a power interface configured to be connected to a battery pack for supplying power to the electric motor. The battery pack includes a housing assembly; a battery cell module disposed in the housing assembly and including at least multiple battery cells; a circuit board disposed in the housing assembly and electrically connected to the multiple battery cells; a battery terminal electrically connected to the multiple battery cells to connect the multiple battery cells to an electrical device for transmitting electric power; and a polyurea coating evenly sprayed to an external surface of the housing assembly, and to an internal surface of the housing assembly.

In an example, the polyurea coating is applied to at least one of the tool body, the battery cell module, the circuit board, and a connector connecting the multiple battery cells.

In an example, the power tool further includes a tool accessory, where the polyurea coating is applied to at least the tool accessory.

In an example, the curing time for the polyurea coating is less than equal to 20 min.

In an example, the battery cell module further includes a cell holder configured to support the multiple battery cells, and the polyurea coating is applied to the cell holder and/or at least one of the multiple battery cells.

In an example, the cell holder includes a portion that is exposed after the battery pack is assembled, and the polyurea coating is applied to at least an external surface of the exposed cell holder.

In an example, the polyurea coating is applied to at least part of an external surface and/or at least part of an internal surface of the housing assembly.

In an example, the thickness of the polyurea coating applied to the at least part of the housing assembly is less than or equal to 5 mm.

In an example, the circuit board includes a substrate, an electronic component supported on the substrate, and a base coating applied to at least the electronic component, where the polyurea coating is applied to the base coating.

In an example, the base coating is applied to the substrate and/or the electronic component.

A battery pack includes a housing assembly; a battery cell module disposed in the housing assembly and including at least multiple battery cells; a circuit board disposed in the housing assembly and electrically connected to the multiple battery cells; a battery terminal electrically connected to the multiple battery cells to connect the multiple battery cells to an electrical device for transmitting electric power; and a polyurea coating applied to at least part of the housing assembly.

In some examples, the polyurea coating is applied to at least one of the battery cell module, the circuit board, and a connector connecting the multiple battery cells.

In some examples, the battery cell module further includes a cell holder configured to support the multiple battery cells, and the polyurea coating is applied to the cell holder and/or at least one of the multiple battery cells.

In some examples, the cell holder includes a portion that is exposed after the battery pack is assembled, and the polyurea coating is applied to at least an external surface of the exposed cell holder.

In some examples, the polyurea coating is applied to at least part of an external surface and/or at least part of an internal surface of the housing assembly.

In some examples, the thickness of the polyurea coating applied to the at least part of the housing assembly is less than or equal to 5 mm.

In some examples, the curing time for the polyurea coating is controllable.

In some examples, the curing time for the polyurea coating is less than equal to 20 min.

In some examples, the circuit board includes a substrate, an electronic component supported on the substrate, and a base coating applied to at least the electronic component, where the polyurea coating is applied to the base coating.

In some examples, the base coating is applied to the substrate and the electronic component.

The benefit of the present invention is that the impact resistance of the battery pack is improved by spraying a highly elastomeric polyurea coating on the housing assembly of the battery pack.

### BRIEF DESCRIPTION OF DRAWINGS

FIG. 1 is a structural view of a power tool according to an example of the present application;
FIG. 2 is a perspective view of a battery pack according to an example of the present application;
FIG. 3 is an exploded view of the battery pack in FIG. 2;
FIG. 4 is a perspective view of a battery pack according to an example of the present application;
FIG. 5 is an exploded view of the battery pack in FIG. 4;
FIG. 6 is a perspective view of a battery pack according to an example of the present application; and
FIG. 7 is an exploded view of the battery pack in FIG. 6.

### DETAILED DESCRIPTION

Before any examples of this application are explained in detail, it is to be understood that this application is not limited to its application to the structural details and the arrangement of components set forth in the following description or illustrated in the above drawings.

In this application, the terms "comprising", "including", "having" or any other variation thereof are intended to cover an inclusive inclusion such that a process, method, article or device comprising a series of elements includes not only those series of elements, but also other elements not expressly listed, or elements inherent in the process, method, article, or device. Without further limitations, an element defined by the phrase "comprising a ..." does not preclude the presence of additional identical elements in the process, method, article, or device comprising that element.

In this application, the term "and/or" is a kind of association relationship describing the relationship between associated objects, which means that there can be three kinds of relationships. For example, A and/or B can indicate that A exists alone, A and B exist simultaneously, and B exists alone. In addition, the character "/" in this application generally indicates that the contextual associated objects belong to an "and/or" relationship.

In this application, the terms "connection", "combination", "coupling" and "installation" may be direct connection, combination, coupling or installation, and may also be indirect connection, combination, coupling or installation. Among them, for example, direct connection means that two members or assemblies are connected together without intermediaries, and indirect connection means that two members or assemblies are respectively connected with at least one intermediate members and the two members or assemblies are connected by the at least one intermediate members. In addition, "connection" and "coupling" are not limited to physical or mechanical connections or couplings, and may include electrical connections or couplings.

In this application, it is to be understood by those skilled in the art that a relative term (such as "about", "approximately", and "substantially") used in conjunction with quantity or condition includes a stated value and has a meaning dictated by the context. For example, the relative term includes at least a degree of error associated with the measurement of a particular value, a tolerance caused by manufacturing, assembly, and use associated with the particular value, and the like. Such relative term should also be considered as disclosing the range defined by the absolute values of the two endpoints. The relative term may refer to plus or minus of a certain percentage (such as 1%, 5%, 10%, or more) of an indicated value. A value that did not use the relative term should also be disclosed as a particular value with a tolerance. In addition, "substantially" when expressing a relative angular position relationship (for example, substantially parallel, substantially perpendicular), may refer to adding or subtracting a certain degree (such as 1 degree, 5 degrees, 10 degrees or more) to the indicated angle.

In this application, those skilled in the art will understand that a function performed by an assembly may be performed by one assembly, multiple assemblies, one member, or multiple members. Likewise, a function performed by a member may be performed by one member, an assembly, or a combination of members.

In this application, the terms "up", "down", "left", "right", "front", and "rear" " and other directional words are described based on the orientation or positional relationship shown in the drawings, and should not be understood as limitations to the examples of this application. In addition, in this context, it also needs to be understood that when it is mentioned that an element is connected "above" or "under" another element, it can not only be directly connected "above" or "under" the other element, but can also be indirectly connected "above" or "under" the other element through an intermediate element. It should also be understood that orientation words such as upper side, lower side, left side, right side, front side, and rear side do not only represent perfect orientations, but can also be understood as lateral orientations. For example, lower side may include directly below, bottom left, bottom right, front bottom, and rear bottom.

In this application, the terms "controller", "processor", "central processor", "CPU" and "MCU" are interchangeable. Where a unit "controller", "processor", "central processing", "CPU", or "MCU" is used to perform a specific function, the specific function may be implemented by a single aforementioned unit or a plurality of the aforementioned unit.

In this application, the term "device", "module" or "unit" may be implemented in the form of hardware or software to achieve specific functions.

In this application, the terms "computing", "judging", "controlling", "determining", "recognizing" and the like refer to the operations and processes of a computer system or similar electronic computing device (e.g., controller, processor, etc.).

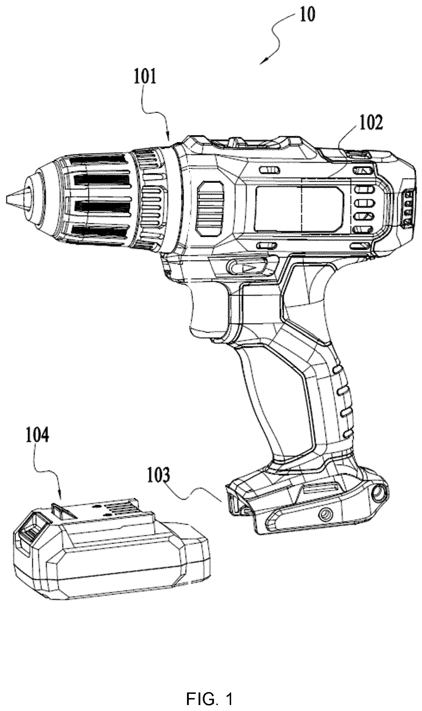

Referring to a power tool 10 shown in FIG. 1, the power tool 10 includes a tool body 101, an electric motor 102, and a power interface 103. The power interface 103 may be connected to a battery pack 104.

The battery pack 104 involved here can be adapted to various types of power tools 10. For example, the power tool 10 may be a handheld power tool, such as a drill, a hedge trimmer, or a sander. Alternatively, the power tool 10 may be a table tool, such as a table saw or a miter saw. Alternatively, the power tool 10 may be a push power tool, such as a push mower or a push snow thrower. Alternatively, the power tool 10 may be a riding power tool, such as a riding mower, a riding vehicle, or an all-terrain vehicle. Alternatively, the power tool 10 may be a robotic tool, such as a robotic mower or a robotic snow thrower. In some examples, the power tool 10 may be an electric drill, an electric lamp, an electric vehicle, or the like. In some examples, the power tool 10 may be a garden tool, such as a hedge trimmer, a blower, a mower, or a chain saw. Alternatively, the power tool 10 may be a decorating tool, such as a screwdriver, a nail gun, a circular saw, or a sander. In some examples, the power tool 10 may be a vegetation care tool, such as a grass trimmer, a mower, a hedge trimmer, or a chain saw. Alternatively, the power tool 10 may be a cleaning tool, such as a blower, a snow thrower, or a washer. Alternatively, the power tool 10 may be a drill-like tool, such as a drill, a screwdriver, a wrench, or an electric hammer. Alternatively, the power tool 10 may be a saw-like tool, such as a reciprocating saw, a jigsaw, or a circular saw. Alternatively, the power tool 10 may be a table tool, such as a table saw, a miter saw, a metal cutter, or an electric router. Alternatively, the power tool 10 may be a sanding tool, such as an angle grinder or a sander. Alternatively, the power tool 10 may be another tool, such as a lamp or a fan.

The battery pack 104 in the example of the present application may be a liquid lithium-ion battery with a polymer housing, a pouch battery, or a hard pack battery using hard materials as the battery housing. For example, the housing of the hard pack battery may be made of plastic, steel, or aluminum. The battery cells in the battery pack 104 may be cylindrical cells, square cells, or sheet cells. The battery pack 104 may be a lithium iron phosphate battery, a ternary lithium battery, a sodium-ion battery, or the like. The battery pack 104 in FIG. 1 may include the battery pack in the examples below.

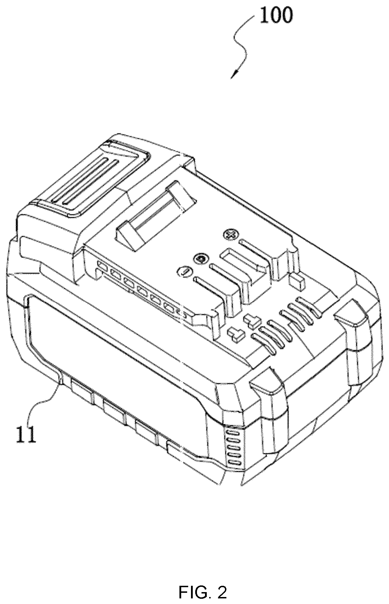

A battery pack 100 shown in FIG. 2 is a pouch battery. The battery pack 100 includes a housing assembly 11, a battery cell module 12 disposed in the housing assembly 11, a circuit board 13, and a battery terminal 14. The battery cell module 12 may include at least multiple battery cells 121, which may also be referred to as cell units or cells. A connector (not shown) is disposed between at least two battery cells 121, and the connector can electrically connect at least two battery cells 121.

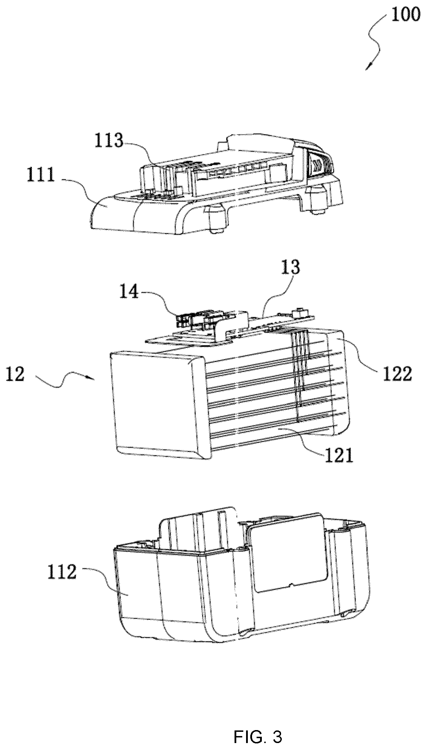

As shown in FIG. 3, the housing assembly 11 may include an upper housing 111 and a lower housing 112. After being assembled, the upper housing 111 and the lower housing 112 can form an accommodation space for fixing and accommodating the battery cell module 12 and the circuit board 13. A battery interface 113 is formed on the surface of the upper housing 111 or the lower housing 112, and the battery terminal 14 is located in the battery interface 113. The battery terminal 14 is electrically connected to the battery cells 121, and the battery terminal 14 includes at least a positive battery terminal and a negative battery terminal and may further include a communication terminal. The battery pack 100 may be electrically connected to a tool terminal on the power tool housing through the battery terminal 14 to transmit electric power or communicate data between the battery pack 100 and the power tool. **In** this example, the battery terminal 14 is disposed on the circuit board 13.

The circuit board 13 may also be provided with other electronic components, such as a battery management chip that manages the charging and discharging of the battery pack 100. In an example, the circuit board 13 and the electronic components or the battery terminal 14 disposed on the circuit board 13 may be electrically connected through wires. Different battery cells 121 may be electrically connected using cell connectors or wires. Any welding manner such as spot welding, line welding, surface welding, ultrasonic welding, or laser spot welding may be adopted between the battery cells 121 and the wires, the circuit board 13 and the electronic components, or the battery cells 121. In this example, the battery management chip may also be referred to as a battery management module and may include one or more electronic components or integrated management chips, such as microcontroller units (MCUs).

In this example, the battery cell module 12 may further include a cell holder 122 for supporting the multiple battery cells 121. In an example, the cell holder 122 is disposed at two ends of a cell group formed by the multiple battery cells 121. In an example, the cell holder 122 may form multiple support cavities, and each support cavity can accommodate at least one battery cell 121. In an example, the whole cell holder 122 is accommodated in the accommodation space formed by the housing assembly 11. In an example, part of the external surface of the cell holder 122 is exposed.

Generally, when the battery pack is discharged during normal use, the structural strength of the battery pack is sufficient to support the application in different working conditions or scenarios. However, under special circumstances, the impact load causes damage to the surface of the impacted structure and the structure and may even cause the structure to completely lose functionality, causing secondary damage. For example, when the battery pack accidentally falls from a high place, or a user inadvertently uses the battery pack as a hammer, the housing assembly of the battery pack cannot withstand a relatively large impact force, causing the housing assembly to be damaged. In serious cases, dangerous situations such as burning or explosion of the battery cells inside the battery pack may occur.

To solve the preceding problems, in the present invention, the impact toughness of the battery pack is enhanced by enhancing at least the impact resistance of the housing assembly.

In an example, a polyurea coating may be applied to at least a portion of the housing assembly. The polyurea coating is specifically a polyurea resin coating, may also be referred to as a polyurea elastomer, and relates to an efficient coating protection technology. Polyurea is produced by a rapid polymerization reaction between an isocyanate component (-NCO) and an amino component (-NH₂). The advantages of convenient construction, lightweight, and high impact energy absorption are ensured.

In this example, the polyurea coating may be a colloidal material formulated with a high-strength anchoring agent, an accelerator, and some auxiliary materials in a certain proportion. The coating is cured quickly after being sprayed on the surface of an object. In fact, the curing time for the polyurea coating on the housing assembly may be as small as a few seconds, a few minutes, more than ten and less than twenty minutes, or more than twenty and less than thirty minutes. The curing time for the polyurea coating is controllable. Generally, the curing time for polyurea may be adjusted by adjusting the proportion of the anchoring agent. In some examples, the curing time for the polyurea coating is also related to the ambient temperature of the coating spraying and the like. The user may adjust the curing time of the polyurea coating by adjusting the ambient temperature.

In this example, the curing time for the polyurea coating is less than equal to 20 min. In an example, the curing time for the polyurea coating is less than equal to 10 min. In an example, the curing time for the polyurea coating is less than equal to 5 min. In an example, the curing time for the polyurea coating is less than or equal to 1 min. For example, the curing time for the polyurea coating may be 5s, 10s, 20s, 30s, 40s, 50s, 60s, or the like. In this example, the curing time for the polyurea on the housing may be adjusted to be shorter, for example, 5s, to prevent the following: after non-solid polyurea is sprayed at the corners of the housing assembly, the polyurea flows due to the influence of gravity before being cured, resulting in a relatively thin polyurea coating at the corners or even the completely loss of polyurea at the corners. It is to be understood that since the curing time for the polyurea coating on the housing assembly is very short, the non-solid polyurea may be cured quickly after being sprayed on the housing and thus may be sprayed evenly on the surface of the housing without the affect of external factors such as gravity or tension.

In this example, the method in which the polyurea coating is applied to the housing assembly is not limited and may be spraying, vapor deposition, or another method. In an example, the thickness of the polyurea coating on the housing assembly is less than or equal to 5 mm. In an example, the thickness of the polyurea coating on the housing assembly is less than or equal to 3 mm. In an example, the thickness of the polyurea coating on the housing assembly is less than or equal to 2 mm. In an example, the thickness of the polyurea coating on the housing assembly is less than or equal to 1.5 mm. In an example, the thickness of the polyurea coating on the housing assembly is less than or equal to 1 mm. For example, the thickness of the polyurea coating on the housing assembly may be 3 mm, 2 mm, 2.5 mm, 2 mm, 1.5 mm, 1 mm, or the like.

The polyurea coating is evenly applied to the external surface of the housing assembly to form a strong protective layer, which can play a certain waterproof role and have certain wear-resistant properties. In some examples, the polyurea coating is applied to part of the housing assembly, for example, the landing position of the falling battery pack or the habitual knocking position of the user. These positions may be obtained through multiple falling experiments or knocking experiments. The polyurea coating is evenly applied to the internal surface of the housing assembly.

In some examples, the polyurea coating may be applied to the battery cell module, the circuit board, or the connector connecting at least two battery cells. The polyurea coating may be applied to the battery cells of the battery cell module or the cell holder. It is to be understood that the polyurea coating applied to the circuit board, the battery terminal, or the battery cells can not only enhance the strength of the coating part but also play a role of electrical insulation.

In an example, the circuit board includes a substrate, which may also be referred to as a substrate board. The circuit board may further include an electronic component supported on the substrate and a base coating applied to the electronic component. In this example, the polyurea coating may be applied to the base coating.

The thickness of the polyurea coating applied to different parts of the battery pack may be the same or different. In an example, the thickness of the polyurea coating applied to the housing assembly is greater than the thickness of the coating applied to the circuit board, the battery terminal, or the battery cell module. For example, the thickness of the polyurea coating applied to the housing may be 1 mm, while the thickness of the polyurea coating applied to the circuit board may be 10 µm.

In other examples, the polyurea coating may be sprayed on the power tool to which the battery pack is adapted, for example, on the power tool housing.

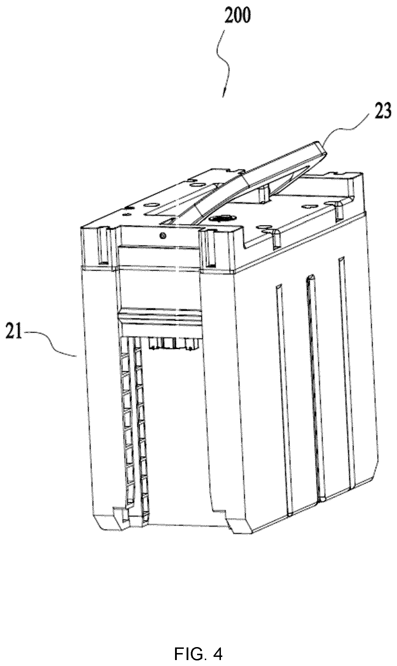

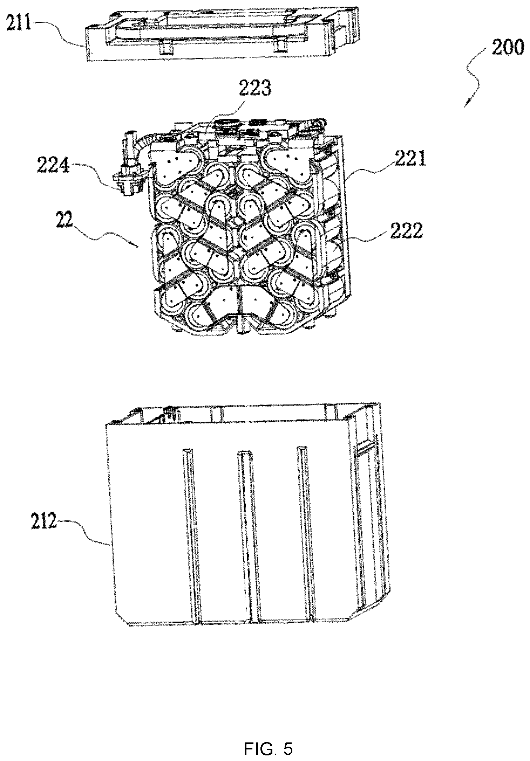

The polyurea coating in the present application may be sprayed on a housing 21 of a basically cuboid battery pack 200 shown in FIGS. 4 and 5, a battery cell module 22 in the housing 21, or a handle 23. The housing 21 includes an upper cover 211 and a bottom compartment 212. The bottom compartment 212 is configured to be a cuboid cavity with an upper opening, and the battery cell module 22 is accommodated in the bottom compartment 212. The battery cell module 22 includes at least a cell holder 221, multiple battery cells 222, a circuit board 223 electrically connected to the battery cells 222, and a battery terminal 224 electrically coupled to the circuit board 223.

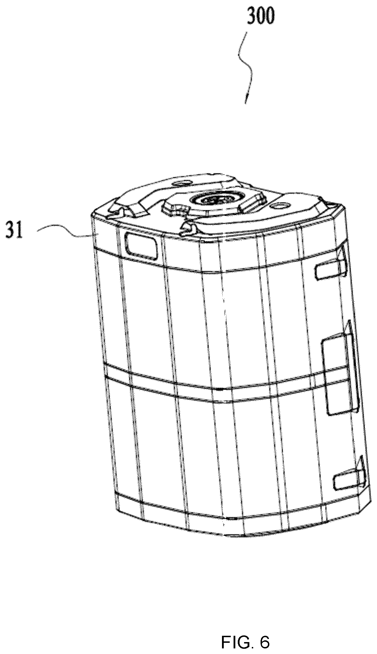

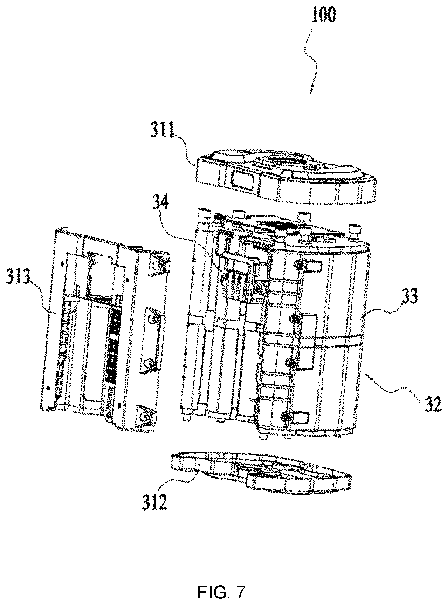

The polyurea coating in the present application may be sprayed on a housing 31 of a battery pack 300 shown in FIGS. 6 and 7. Alternatively, the polyurea coating is sprayed on other parts of the battery pack 300. The housing 31 includes an upper end cover 311, a lower end cover 312, and a side end surface 313. In this example, most of a cell holder 33 of a battery cell module 32 in the battery pack 300 are exposed to the outside, forming the housing 31 of the battery pack 300. That is to say, the outer portion of the cell holder 33, the upper end cover 311, the lower end cover 312, and the side end surface 313 form the housing of the battery pack 300. The battery pack 300 further includes a battery terminal 34 located in the side end surface 313.

The specific structures of the battery pack 200 and the battery pack 300 are not introduced too much here. In some examples, the polyurea coating may be sprayed on at least part of the structure of another type of battery pack, which is not introduced one by one here.

In some examples, the polyurea coating may be applied to the body of the power tool, for example, to the power tool housing, an electric motor housing in the power tool, or a tool accessory on the power tool, such as a drill bit or a bit.

## Claims

1. A battery pack (100, 200, 300) for a power tool (10), comprising:
a housing assembly (11);
a battery cell module (12, 22, 32) disposed in the housing assembly (11) and
comprising at least a plurality of battery cells (121, 222);
a circuit board (13, 223) disposed in the housing assembly (11) and electrically connected to the plurality of battery cells (121, 222);
a battery terminal (14, 224, 34) electrically connected to the plurality of battery cells (121, 222) to connect the plurality of battery cells (121, 222) to the power tool (10) for transmitting electric power; and
a polyurea coating evenly sprayed to an external surface of the housing assembly (11) including corners of the housing assembly (11), and to an internal surface of the housing assembly (11).

2. The battery pack (100, 200, 300) of claim 1, wherein the polyurea coating is applied to at least one of the battery cell module (12, 22, 32), the circuit board (13, 223), and a connector connecting the plurality of battery cells (121, 222).

3. The battery pack (100, 200, 300) of claim 1, wherein the battery cell module (12, 22, 32) further comprises a cell holder (122, 221, 33) configured to support the plurality of battery cells (121, 222), and the polyurea coating is applied to the cell holder and/or at least one of the plurality of battery cells (121, 222).

4. The battery pack (100, 200, 300) of claim 3, wherein the cell holder comprises a portion that is exposed after the battery pack (100, 200, 300) is assembled, and the polyurea coating is applied to an external surface of the exposed cell holder.

5. The battery pack (100, 200, 300) of claim 1, wherein the polyurea coating is applied to at least part of an external surface and/or at least part of an internal surface of the housing assembly (11).

6. The battery pack (100, 200, 300) of claim 1, wherein a thickness of the polyurea coating applied to the at least part of the housing assembly (11) is less than or equal to 5 mm.

7. The battery pack (100, 200, 300) of claim 1, wherein curing time for the polyurea coating is controllable.

8. The battery pack (100, 200, 300) of claim 1, wherein curing time for the polyurea coating is less than equal to 20 min.

9. The battery pack (100, 200, 300) of claim 1, wherein the circuit board (13, 223) comprises a substrate, an electronic component supported on the substrate, and a base coating applied to at least the electronic component, wherein the polyurea coating is applied to the base coating.

10. The battery pack (100, 200, 300) of claim 9, wherein the base coating is applied to the substrate and the electronic component.

11. A power tool (10), comprising:
a tool body (101);
an electric motor (102) disposed in the tool body (101);
a power interface (103); and
a battery pack (100, 200, 300) of any one of the claims 1-10;
wherein the power interface is configured to be connected to the battery pack (100, 200, 300) for supplying power to the electric motor (102).

## Patentansprüche

1. Akkupack (100, 200, 300) für ein Elektrowerkzeug (10), umfassend:
eine Gehäuseanordnung (11);
ein Batteriezellenmodul (12, 22, 32), das in der Gehäuseanordnung (11) angeordnet ist und mindestens eine Mehrzahl von Batteriezellen (121, 222) umfasst;
eine Leiterplatte (13, 223), die in der Gehäuseanordnung (11) angeordnet und elektrisch mit der Mehrzahl von Batteriezellen (121, 222) verbunden ist;
einen Batterieanschluss (14, 224, 34), der elektrisch mit der Mehrzahl von Batteriezellen (121, 222) verbunden ist, um die Mehrzahl von Batteriezellen (121, 222) zum Übertragen elektrischer Leistung mit dem Elektrowerkzeug (10) zu verbinden; und
eine Polyurea-Beschichtung, die gleichmäßig auf eine Außenfläche der Gehäuseanordnung (11) einschließlich Ecken der Gehäuseanordnung (11) und auf eine Innenfläche der Gehäuseanordnung (11) aufgesprüht ist.

2. Akkupack (100, 200, 300) nach Anspruch 1, wobei die Polyurea-Beschichtung auf mindestens eines des Batteriezellenmoduls (12, 22, 32), der Leiterplatte (13, 223) und eines Verbinders, der die Mehrzahl von Batteriezellen (121, 222) verbindet, aufgebracht ist.

3. Akkupack (100, 200, 300) nach Anspruch 1, wobei das Batteriezellenmodul (12, 22, 32) ferner einen Zellhalter (122, 221, 33) umfasst, der dazu ausgebildet ist, die Mehrzahl von Batteriezellen (121, 222) zu stützen, und die Polyurea-Beschichtung auf den Zellhalter und/oder mindestens eine der Mehrzahl von Batteriezellen (121, 222) aufgebracht ist.

4. Akkupack (100, 200, 300) nach Anspruch 3, wobei der Zellhalter einen Abschnitt umfasst, der freiliegt, nachdem der Akkupack (100, 200, 300) zusammengebaut ist, und die Polyurea-Beschichtung auf eine Außenfläche des freiliegenden Zellhalters aufgebracht ist.

5. Akkupack (100, 200, 300) nach Anspruch 1, wobei die Polyurea-Beschichtung auf mindestens einen Teil einer Außenfläche und/oder mindestens einen Teil einer Innenfläche der Gehäuseanordnung (11) aufgebracht ist.

6. Akkupack (100, 200, 300) nach Anspruch 1, wobei eine Dicke der auf mindestens einen Teil der Gehäuseanordnung (11) aufgebrachten Polyurea-Beschichtung kleiner als oder gleich 5 mm ist.

7. Akkupack (100, 200, 300) nach Anspruch 1, wobei eine Aushärtungszeit für die Polyurea-Beschichtung steuerbar ist.

8. Akkupack (100, 200, 300) nach Anspruch 1, wobei eine Aushärtungszeit für die Polyurea-Beschichtung kleiner als oder gleich 20 min ist.

9. Akkupack (100, 200, 300) nach Anspruch 1, wobei die Leiterplatte (13, 223) ein Substrat, ein auf dem Substrat gestütztes elektronisches Bauelement und eine mindestens auf das elektronische Bauelement aufgebrachte Grundbeschichtung umfasst, wobei die Polyurea-Beschichtung auf die Grundbeschichtung aufgebracht ist.

10. Akkupack (100, 200, 300) nach Anspruch 9, wobei die Grundbeschichtung auf das Substrat und das elektronische Bauelement aufgebracht ist.

11. Elektrowerkzeug (10), umfassend:
einen Werkzeugkörper (101);
einen Elektromotor (102), der in dem Werkzeugkörper (101) angeordnet ist;
eine Stromversorgungsschnittstelle (103); und
einen Akkupack (100, 200, 300) nach einem der Ansprüche 1-10;
wobei die Stromversorgungsschnittstelle dazu ausgebildet ist, mit dem Akkupack (100, 200, 300) verbunden zu werden, um den Elektromotor (102) mit Energie zu versorgen.

## Revendications

1. Bloc-batterie (100, 200, 300) pour un outil électrique (10), comprenant:
un ensemble de boîtier (11);
un module de cellules de batterie (12, 22, 32), disposé dans l'ensemble de boîtier (11) et comprenant au moins une pluralité de cellules de batterie (121, 222);
une carte de circuit (13, 223), disposée dans l'ensemble de boîtier (11) et électriquement connectée à la pluralité de cellules de batterie (121, 222);
une borne de batterie (14, 224, 34), électriquement connectée à la pluralité de cellules de batterie (121, 222) afin de connecter la pluralité de cellules de batterie (121, 222) à l'outil électrique (10) pour transmettre une puissance électrique; et
un revêtement de polyurée pulvérisé uniformément sur une surface externe de l'ensemble de boîtier (11), y compris les coins de l'ensemble de boîtier (11), et sur une surface interne de l'ensemble de boîtier (11).

2. Bloc-batterie (100, 200, 300) selon la revendication 1, dans lequel le revêtement de polyurée est appliqué sur au moins l'un du module de cellules de batterie (12, 22, 32), de la carte de circuit (13, 223) et d'un connecteur reliant la pluralité de cellules de batterie (121, 222).

3. Bloc-batterie (100, 200, 300) selon la revendication 1, dans lequel le module de cellules de batterie (12, 22, 32) comprend en outre un porte-cellules (122, 221, 33) configuré pour supporter la pluralité de cellules de batterie (121, 222), et le revêtement de polyurée est appliqué sur le porte-cellules et/ou sur au moins l'une de la pluralité de cellules de batterie (121, 222).

4. Bloc-batterie (100, 200, 300) selon la revendication 3, dans lequel le porte-cellules comprend une partie qui est exposée après assemblage du bloc-batterie (100, 200, 300), et le revêtement de polyurée est appliqué sur une surface externe du porte-cellules exposé.

5. Bloc-batterie (100, 200, 300) selon la revendication 1, dans lequel le revêtement de polyurée est appliqué sur au moins une partie d'une surface externe et/ou au moins une partie d'une surface interne de l'ensemble de boîtier (11).

6. Bloc-batterie (100, 200, 300) selon la revendication 1, dans lequel une épaisseur du revêtement de polyurée appliqué sur ladite au moins une partie de l'ensemble de boîtier (11) est inférieure ou égale à 5 mm.

7. Bloc-batterie (100, 200, 300) selon la revendication 1, dans lequel un temps de durcissement du revêtement de polyurée est contrôlable.

8. Bloc-batterie (100, 200, 300) selon la revendication 1, dans lequel un temps de durcissement du revêtement de polyurée est inférieur ou égal à 20 min.

9. Bloc-batterie (100, 200, 300) selon la revendication 1, dans lequel la carte de circuit (13, 223) comprend un substrat, un composant électronique supporté sur le substrat, et un revêtement de base appliqué au moins sur le composant électronique, dans lequel le revêtement de polyurée est appliqué sur le revêtement de base.

10. Bloc-batterie (100, 200, 300) selon la revendication 9, dans lequel le revêtement de base est appliqué sur le substrat et sur le composant électronique.

11. Outil électrique (10), comprenant:
un corps d'outil (101);
un moteur électrique (102), disposé dans le corps d'outil (101);
une interface d'alimentation électrique (103); et
un bloc-batterie (100, 200, 300) selon l'une quelconque des revendications 1 à 10;
dans lequel l'interface d'alimentation électrique est configurée pour être connectée au bloc-batterie (100, 200, 300) afin de fournir de l'énergie au moteur électrique (102).
